Europäisches Patentamt

European Patent Office

Office européen des brevets

(11) Numéro de publication: **0 326 200 B1**

## FASCICULE DE BREVET EUROPEEN

(45) Date de publication de fascicule du brevet: **03.08.94** (51) Int. Cl.⁵: **H04N 5/335**, G02B 6/06

(21) Numéro de dépôt: **89200071.2**

(22) Date de dépôt: **13.01.89**

(54) **Caméra de prise de vue de télévision ayant une résolution accrue dans une partie du champ d'image.**

(30) Priorité: **19.01.88 FR 8800552**

(43) Date de publication de la demande:
**02.08.89 Bulletin 89/31**

(45) Mention de la délivrance du brevet:
**03.08.94 Bulletin 94/31**

(84) Etats contractants désignés:
**DE FR GB**

(56) Documents cités:
**US-A- 3 935 381**
**US-A- 4 099 833**
**US-A- 4 223 343**
**US-A- 4 683 498**

**PATENT ABSTRACTS OF JAPAN, vol. 9, no.
159 (E-326), 4 juillet 1985, page 132 E326; &
JP-A-60 37 887 (FUJI SHASHIN FILM K.K.)
27-02-1985**

(73) Titulaire: **LABORATOIRES D'ELECTRONIOUE
PHILIPS
3, Avenue Descartes
F-94450 Limeil-Brévannes(FR)**

(84) Etats contractants désignés:
**FR**

(73) Titulaire: **N.V. Philips' Gloeilampenfabrieken
Groenewoudseweg 1
NL-5621 BA Eindhoven(NL)**

(84) Etats contractants désignés:
**DE GB**

(72) Inventeur: **Lemonier, Michel
SOCIETE CIVILE S.P.I.D.
209, rue de l'Université
F-75007 Paris(FR)**

(74) Mandataire: **Landousy, Christian et al
Société Civile S.P.I.D.
156, Boulevard Haussmann
F-75008 Paris (FR)**

## Description

L'invention concerne une caméra de prise de vue de télévision destinée à examiner une scène et à en fournir une image dont une partie présente une résolution accrue.

Une telle caméra trouve son application dans des dispositifs de visée ou de scrutation de scène qui nécessite de distinguer avec précision une partie du champ de l'image tout en tolérant une résolution plus faible dans le champ de vision environnant.

Une invention de ce genre est connu du document GB-A-0 893 918. Il décrit un système de télévision opérant en circuit fermé qui permet d'obtenir à partir d'une scène une image dans laquelle au voisinage d'un réticule il existe un accroissement de résolution. Le système de télévision comprend une caméra de télévision et des moyens permettant aux lignes de balayage d'être plus rapprochées dans la région qui comprend le réticule. Cette région présente ainsi une résolution accrue. La caméra est formée d'un tube de télévision pour lequel le balayage du faisceau de lecture est tel qu'il y a une densité accrue de lignes au centre de l'image. A la sortie de la caméra le signal vidéo correspond à une image qui est donc distordue. Elle est corrigée par le tube de visualisation qui restitue une image non distordue. La caméra et le tube de visualisation doivent donc être appariés et disposer de deux balayages identiques non standard. Le tube de visualisation n'est donc pas universel.

D'autre part une telle caméra ne possède pas une fidélité et une stabilité géométrique suffisante, elle nécessite des tensions analogiques de commande élevées et stables. Sa taille est trop importante pour beaucoup d'applications.

Le problème technique posé est donc de disposer d'une caméra ne présentant pas ces inconvénients. Elle doit disposer d'une résolution accrue dans une partie de l'image pour pouvoir s'apparier avec des systèmes de visualisation classiques, permettre de disposer d'un champ de vision plus étendu et avoir des dimensions faibles afin d'être aisément manipulable.

On connaît d'autre part la demande intermédiaire EP-A-0 295 728 qui décrit un tube de prise de vue muni d'un dispositif d'anamorphose produisant une déformation unique dans une direction prescrite. Mais ce dispositif ne peut pas produire deux ou plusieurs zones déformées dans cette direction prescrite. Le tube n'a en conséquence aucun moyen électronique pour compenser la distorsion apparaissant sur ces différentes zones.

Le document US - A - 4 223 433 décrit un système de conversion de l'image d'un film chimique en image électronique, l'image chimique ayant été enregistrée déformée horizontalement par une lentille anamorphique afin d'obtenir un effet panoramique lors de la projection. L'image électronique subit alors une compensation électronique de façon à ce qu'un signal représentatif d'une image aux proportions réelles soit obtenu en sortie.

Le document US - A - 4 099 833 décrit une lentille anamorphique présentant un axe de symétrie de révolution.

Le document US - A - 4 683 498 décrit un processus et un appareil de compression électronique des parties droite et gauche d'une image.

La solution du problème technique consiste en ce que la caméra possède en entrée un objectif qui fournit une image de la scène sur la surface d'entrée d'une optique anamorphosante qui déforme l'image selon une loi définie à l'avance dans une direction unique donnée pour obtenir au moins deux parties d'image de grandissement différent, l'optique coopérant avec un dispositif de prise de vue à transfert de charges qui comprend des moyens pour compenser électroniquement la déformation créée par l'optique anamorphosante pour chacune desdites parties d'images en opérant, à l'aide d'une horloge modulée en fréquence, une lecture des charges créées par l'image optique incidente dans le dispositif de prise de vue à transfert de charges.

Le but poursuivi par l'invention est d'accroître la résolution préférentiellement au centre du champ de vision. Ceci peut être obtenu en disposant conjointement de part et d'autre de la zone centrale, d'un champ d'observation plus large mais de résolution moindre. En effet lorsqu'une scène est observée par un observateur, il centre son attention sur une partie qui l'intéresse et est moins attentif aux parties environnantes. La caméra doit donc permettre de fournir à l'observateur un nombre accru d'informations dans cette partie centrale et cela même au détriment des parties latérales. Le champ de vision de l'observateur va ainsi pouvoir être décomposé en deux parties, une partie centrale où la résolution spatiale est supérieure à celle d'un dispositif à transfert de charges (DTC) utilisé de façon standard, et le reste du champ de vision où la résolution sera inférieure. Il est possible de faire en sorte que la résolution devienne progressivement de plus en plus faible lorsque l'on passe de la partie centrale aux parties latérales du champ de vision. Il peut bien évidemment s'agir d'une partie droite et d'une partie gauche d'image et réciproquement.

L'optique anamorphosante doit déformer l'image dans une seule direction. Elle peut délivrer une image dans laquelle lesdites parties d'images de grandissement différent forment une image progressivement grandie ou dégrandie.

Elle peut également délivrer une image dans laquelle lesdites parties d'images de grandissement différent comprennent au moins une partie grandie ou dégrandie.

Les termes grandie respectivement dégrandie signifiant que le grandissement est supérieur respectivement inférieur à l'unité.

L'optique anamorphosante peut ainsi délivrer une image ayant un grandissement modifié dans ses parties extrêmes, la partie centrale n'étant pas modifiée.

Pour cela elle comprend un conduit d'images à fibres optiques principal ayant une surface d'entrée non plane, accolé par une partie de sa surface d'entrée à toute l'étendue d'une surface de sortie d'au moins un conduit d'images à fibres optiques annexe taillé en forme de biseau, l'autre partie de la surface d'entrée du conduit principal et la face d'entrée du conduit annexe étant situées dans la surface image de l'objectif d'entrée, les axes des fibres optiques des deux conduits n'étant pas parallèles entre eux, la surface de sortie de l'optique anamorphosante étant celle du conduit d'images principal.

Cette surface de sortie est mise en relation avec le dispositif à transfert de charges soit par couplage direct tel que l'optique anamorphosante est accolée par sa face de sortie au dispositif de prise de vue. Il est également possible que l'image obtenue sur la surface de sortie de l'optique anamorphosante soit située dans la surface objet d'un objectif de couplage avec le dispositif de prise de vue.

L'image déformée est détectée par chaque élément du dispositif à transfert de charges et les charges recueillies sont tranférées à un registre à décalage de sortie. Pour cela le dispositif à transfert de charges possède un registre à décalage de sortie qui est lu à l'aide d'une horloge dont la période est programmée en fonction d'une loi prédéterminée, de sorte que le signal délivré par le dispositif à transfert de charges permet de restituer une image finale qui ne soit plus déformée et qui présente une résolution différente selon les parties de l'image. Cette horloge est obtenue à l'aide d'un générateur d'horloge qui agit sur un compteur d'adresses qui sert à lire une mémoire numérique qui stocke des données qui contrôlent un multivibrateur programmable qui délivre l'horloge de lecture selon lesdites données relatives à la loi prédéterminée.

Il est également possible que le registre à décalage de sortie du dispositif à transfert de charges soit lu à l'aide d'une horloge à période uniforme, les données de sortie étant transmises par un canal de transmission vers deux mémoires de ligne externes dont l'une est écrite à période uniforme pendant que l'autre est lue à période programmée, en fonction de la loi prédéterminée, chaque mémoire de lignes étant alternativement commutée en mode lecture et en mode écriture à chaque impulsion de retour de ligne de télévision.

L'invention sera mieux comprise à l'aide des figures suivantes données à titre d'exemple non limitatif et qui représentent :

figure 1 : un schéma de la caméra selon l'invention avec son dispositif de visualisation associé.

figures 2A, 2B, 2C, 2D : des courbes et deux schémas d'une optique anamorphosante qui réalise une déformation uniforme dans une direction dans une partie de l'image.

figures 3A, 3B, 3C, 3D, 3E : des courbes et trois schémas d'une optique anamorphosante qui réalise une déformation progressive dans une direction dans une partie de l'image.

figure 4 : un schéma des moyens électroniques permettant de lire le registre de sortie du dispositif à transfert de charges à période variable.

figure 5 : un diagramme des temps de l'horloge de lecture .

figure 6 : un schéma permettant de relier le dispositif à transfert de charges par une ligne de transmission au dispositif de visualisation en interposant deux mémoires de lignes qui opèrent alternativement en lecture et en écriture et suppriment la déformation de l'image.

figure 7 : un schéma d'un dispositif selon l'invention.

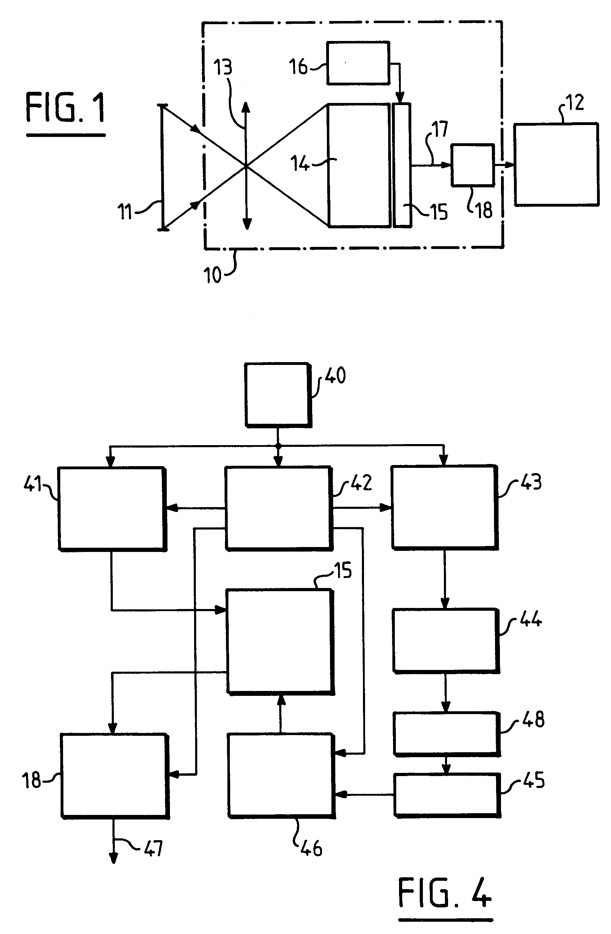

La figure 1 représente une caméra 10, une scène 11 et un dispositif de visualisation 12. La caméra 10 comprend un objectif d'entrée 13 qui forme une image sur la face d'entrée d'une optique anamorphosante 14 qui coopère avec un dispositif à transfert de charges 15 (DTC). Celui-ci reçoit des signaux de commande du dispositif de commande 16 qui génère en particulier les horloges. Le DTC délivre un signal vidéo par la ligne 17 qui est mis en forme dans un amplificateur de sortie 18 pour constituer un signal vidéo qui est délivré au dispositif de visualisation 12. Sur cette figure l'optique anamorphosante 14 est accolée au DTC 15. Il est également possible de dissocier ces deux éléments et d'interposer un objectif de couplage qui focalise la sortie de l'optique anamorphosante 14 sur le DTC 15. De même l'objectif d'entrée 13 est placé en entrée de la caméra ; cet objectif 13 peut se trouver à l'extérieur de la caméra 10.

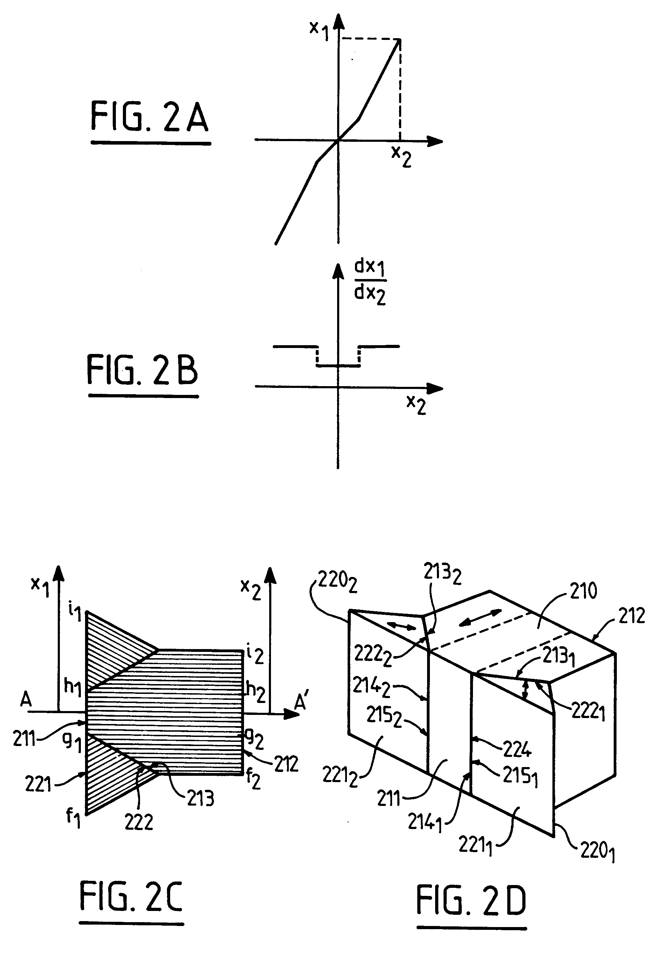

Préférentiellement l'optique anamorphosante décompose le champ de vision en une partie centrale à haute résolution et des parties latérales à plus faible résolution. Dans ce cas l'optique anamorphosante délivre une image uniformément déformée dans une direction dans une certaine partie de l'image. Pour cela la figure 2D montre une optique anamorphosante qui délivre une image déformée dans ses parties extrêmes la partie centrale n'étant pas modifiée. Cette optique anamorphosante comprend :

- un conduit d'images à fibres optiques principal 210 dont les fibres optiques sont parallèles entre elles et à l'axe optique de l'optique anamorphosante, le conduit ayant la forme d'un prisme polygonal avec une surface latérale d'entrée 211 et une surface latérale de sortie 212 sensiblement perpendiculaires à l'axe des fibres optiques, ayant au moins une face latérale adjacente $213_1$, $213_2$ à la face latérale d'entrée 211 et qui la coupe selon une arête latérale principale $214_1$, $214_2$, la face latérale adjacente $213_1$, $213_2$ étant inclinée par rapport à l'axe des fibres optiques,
- et au moins un conduit d'images à fibres optiques annexe $220_1$, $220_2$ qui a la forme d'un prisme triangulaire, une face latérale d'entrée $221_1$, $221_2$ coupant une face latérale de sortie $222_1$, $222_2$ selon une arête latérale annexe $215_1$, $215_2$ en formant un angle déterminé, les axes des fibres optiques étant obliques par rapport à l'axe optique, ces axes étant dirigés vers l'axe de l'optique anamorphosante dans le sens de propagation des rayons lumineux, la face latérale de sortie $222_1$, $222_2$ du conduit annexe étant accolée à la face latérale adjacente $213_1$, $213_2$ du conduit principal, ladite arête latérale principale $214_1$, $214_2$ et ladite arête latérale annexe $215_1$, $215_2$ se confondant lorsque les deux conduits d'images sont accolés.

Une image formée sur la face d'entrée sera transmise par les fibres optiques jusqu'à la face de sortie : les points $f_1$, $g_1$, $h_1$, $i_1$ arriveront respectivement aux points $f_2$, $g_2$, $h_2$ et $i_2$. La partie centrale $g_1$-$h_1$ est représentée sans aucune distorsion en $g_2$-$h_2$, par contre les éléments de l'image tombant entre $h_1$ et $i_1$ et entre $f_1$ et $g_1$ seront réduits d'un certain facteur en dimension latérale. Cette anamorphose n'affecte en rien la distribution verticale des éléments de l'image. L'image formée sur la face de sortie apparaît intacte dans la zone centrale et comprimée pour les zones latérales mais selon l'axe horizontal seulement. Ainsi lorsque l'optique anamorphosante est couplée à un dispositif de prise de vue à transfert de charges tel qu'une matrice de DTC, une proportion importante des éléments d'images du DTC sera consacrée à la partie centrale de l'image. Dans l'exemple représenté figures 2C et 2D la partie centrale $g_1$-$h_1$ qui fait 20% du champ horizontal est représentée en $g_2$-$h_2$ par 33% de la surface sensible du détecteur d'images.

La figure 2A indique la variation de l'abscisse $x_1$ sur la face d'entrée en fonction de l'abscisse $x_2$ sur la face de sortie. La figure 2B indique la dérivée $dx_1/dx_2$ ; elle présente des paliers définis par les lignes de transitions entre les blocs de fibres optiques.

Les deux faces 211, 212 sont respectivement placées dans les plans image et objet respectivement d'un objectif d'entrée et d'un objectif de sortie. L'expression "plan image" peut vouloir dire une surface image courbe. L'objectif de sortie est supprimé lorsque le DTC est directement accolé à la face 212. Préférentiellement ces deux faces 211, 212 sont sensiblement parallèles. Dans ce cas la direction des fibres optiques va sensiblement de la face 211 à la face 212 pour le conduit principal 210. Pour les conduits annexes $220_1$, $220_2$, la direction des fibres optiques est inclinée par rapport aux faces d'entrée $221_1$ ou $221_2$ respectivement. Cette direction doit couper respectivement les faces de sortie $222_1$ et $222_2$.

Il est possible d'utiliser un seul conduit annexe $220_1$ et de décomposer le champ de vision en deux parties gauche/droite avec des résolutions différentes. Selon le mode préférentiel de l'invention le champ de vision est décomposé en une partie centrale à haute résolution et des parties latérales à plus faible résolution. Dans ce cas on utilise deux conduits d'image annexe $220_1$, $220_2$, les angles que font les fibres optiques avec l'axe optique AA′ du système étant égaux et de signe opposé et convergeant vers l'axe de l'optique anamorphosante dans le sens de propagation des rayons lumineux.

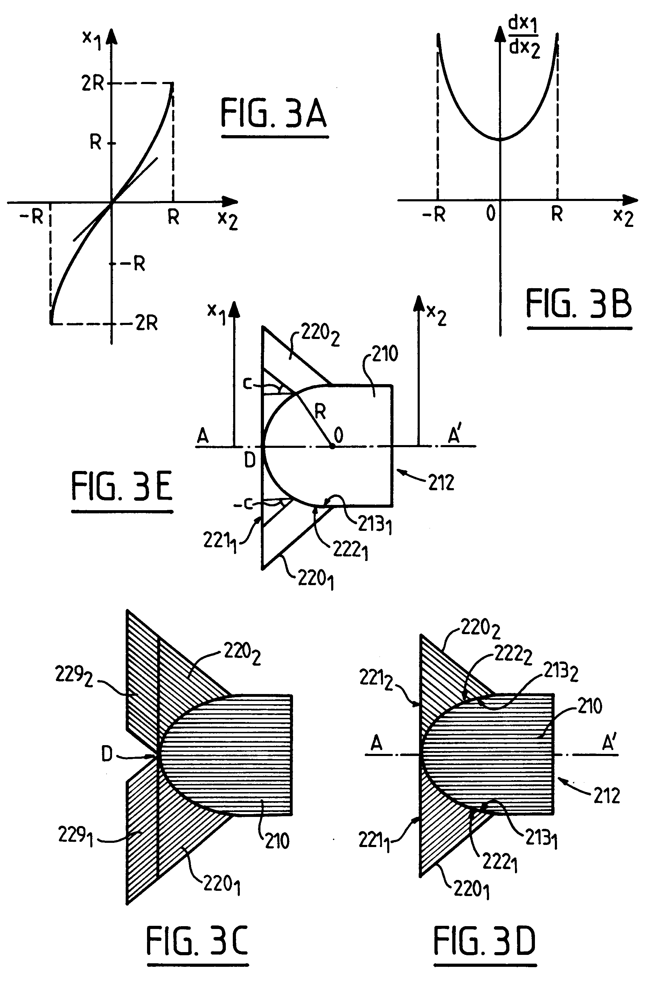

Selon un autre mode de réalisation représenté sur la figure 3D l'optique anamorphosante délivre une image progressivement déformée dans une direction dans une certaine partie de l'image.

La figure 3D montre une optique anamorphosante qui effectue une déformation progressive du champ de vision. Cette optique anamorphosante comprend :

- un conduit d'images à fibres optiques principal 210 qui a la forme d'un cylindre dont la directrice possède un premier segment courbe et au moins un second segment, avec une surface latérale d'entrée courbe, recevant les rayons lumineux, qui est la surface engendrée par la génératrice du cylindre s'appuyant sur le premier segment courbe de la surface directrice, et une face latérale de sortie 212 qui est la surface engendrée par la génératrice du cylindre s'appuyant sur le second segment de la directrice, les axes des fibres optiques étant parallèles entre eux et à l'axe optique de l'optique anamorphosante,
- et au moins un conduit d'images à fibres optiques annexe $220_1$, $220_2$ qui a la forme d'un cylindre ayant une surface d'entrée $221_1$, $221_2$ et une surface latérale de sortie courbe $222_1$, $222_2$, les axes des fibres optiques étant obliques par rapport à l'axe optique, ces axes étant dirigés vers l'axe de l'optique anamorphosante dans le sens de propagation des rayons lumineux, la surface latérale de sortie courbe $222_1$, $222_2$ du conduit annexe étant complémentaire et accolée à la surface latérale d'entrée courbe $213_1$, $213_2$ du conduit principal 210.

Les repères utilisés sur les figures 2C et 2D sont repris sur les figures 3C et 3D pour désigner les parties analogues. Sur la figure 3D la face d'entrée 211 du conduit principal de la figure 2D a disparu et la face d'entrée $221_1$ du conduit annexe s'étend jusqu'à l'axe optique AA' du système. Les surfaces de contact $213_1$ et $222_1$ respectivement du conduit principal et du conduit annexe ne sont plus planes mais sont dans cet exemple les surfaces latérales d'un cylindre ayant un quart de cercle pour courbe directrice.

Selon ce mode de réalisation on obtient une variation continue et progressive du pas des éléments d'images selon l'axe horizontal (ou vertical en opérant une rotation de l'optique). Les deux conduits latéraux $220_1$ et $220_2$ sont taillés dans un bloc (figure 3C) dont les fibres optiques font respectivement des angles +c et -c par rapport à l'axe optique du système (figure 3E). Ces conduits sont rodés et polis pour épouser parfaitement le profil curviligne du conduit principal 210. Dans l'exemple de la figure 3E, le conduit 210 est taillé en forme de demi-cylindre convexe de rayon R. Pour la construction, les conduits $220_1$ et $220_2$ sont taillés en forme de cylindre concave de même rayon R, collés sur le conduit 210 puis rodés et polis jusqu'à ce que le plan d'entrée vienne tangenter le conduit principal au point D en éliminant les parties $229_1$ et $229_2$ (figure 3C).

Avec les notations précédentes, la loi d'anamorphose progressive et continue est :

$$x_1 = x_2 + R \, tg \, c[1-(1-x_2{}^2/R^2)^{1/2}].$$

La figure 3A indique pour cet exemple les variations de l'abscisse $x_1$ sur la face d'entrée en fonction de l'abscisse $x_2$ sur la face de sortie exprimée par rapport au rayon R. La figure 3B indique la dérivée $dx_1/dx_2$, elle présente une variation continue avec un minimum au point D.

Bien évidemment il est possible d'utiliser des surfaces $213_1$ et $222_1$ ayant des formes différentes, par exemple en inversant le sens des concavités, et d'obtenir des lois d'anamorphose différentes.

L'image qui est formée en sortie de l'optique anamorphosante est détectée par un DTC. Celui-ci est préférentiellement un dispositif bidimensionnel organisé en lignes et en colonnes et qui reçoit l'image déformée de sorte que la déformation se présente selon une direction sensiblement parallèle à la direction des lignes. Des DTC à structures unidimentionnelles peuvent également être utilisés. Lorsque le DTC est bidimensionnel, la frontière qui sépare dans l'image les parties déformées et non déformées est disposée parallèlement à une colonne du DTC afin que cette frontière se situe à un endroit déterminé du registre à décalage de sortie.

En se référant aux figures 1 et 2C les mécanismes s'analysent comme suit. La partie centrale non déformée est détectée par le DTC avec une densité de points images qui sontfonction de la densité d'éléments détecteurs du DTC. Sur les parties latérales, le DTC avec une même densité d'éléments détecteurs va détecter une plus faible densité de points d'images d'entrée. On dispose ainsi de plus d'informations au centre de l'image détectée par le DTC. Afin de faire que le signal délivré par le DTC soit compatible avec le dispositif de visualisation habituel, la partie du signal qui correspond au centre de l'image doit être lue plus rapidement. L'horloge de lecture du registre à décalage de sortie est donc modifiée. Pour cela elle présente une période plus courte pour extraire les données correspondant à la partie à haute résolution que pour extraire celles correspondant aux autres parties.

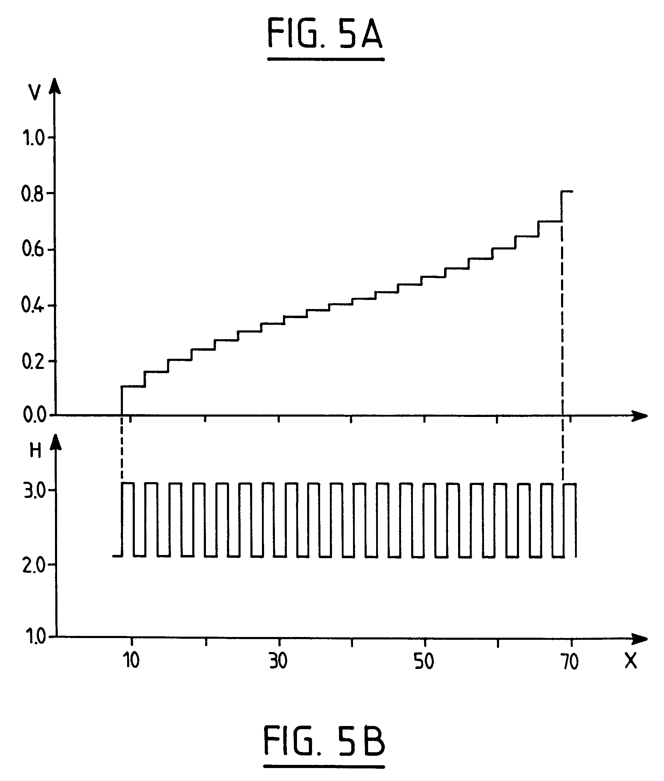

La figure 4 donne un schéma des moyens électroniques permettant de lire à fréquence variable le registre à décalage de sortie du DTC. Un générateur 40 délivre une horloge primaire qui contrôle :

- un séquenceur 41 qui fournit les différents signaux de service nécessaires au DTC,
- un synchronisateur vidéo 42 qui délivre les différents signaux de synchronisation qui sont nécessaires au dispositif de visualisation final,
- un compteur d'adresses 43 réinitialisé à chaque début de ligne vidéo qui permet la lecture du registre de sortie selon une période variable.

Le compteur d'adresses 43 sert à adresser une mémoire numérique 44 qui stocke des données qui contrôlent à l'aide d'un convertisseur numérique-analogique 48, un multivibrateur programmable 45 afin d'asservir sa période à la loi d'anamorphose déterminée par l'optique anamorphosante. Un générateur d'horloge de lecture 46 reçoit la sortie du multivibrateur programmable 45 ainsi que des signaux de synchronisation issus du synchronisateur 42. Le DTC 15 reçoit ces différents signaux de service du séquenceur 41 et une horloge de lecture à période variable du générateur 46. Le DTC 15 délivre un signal vidéo à l'amplificateur vidéo 18 que ce dernier combine avec les signaux de synchronisation issus du synchronisateur 42 pour délivrer en sortie 47 un signal vidéo composite.

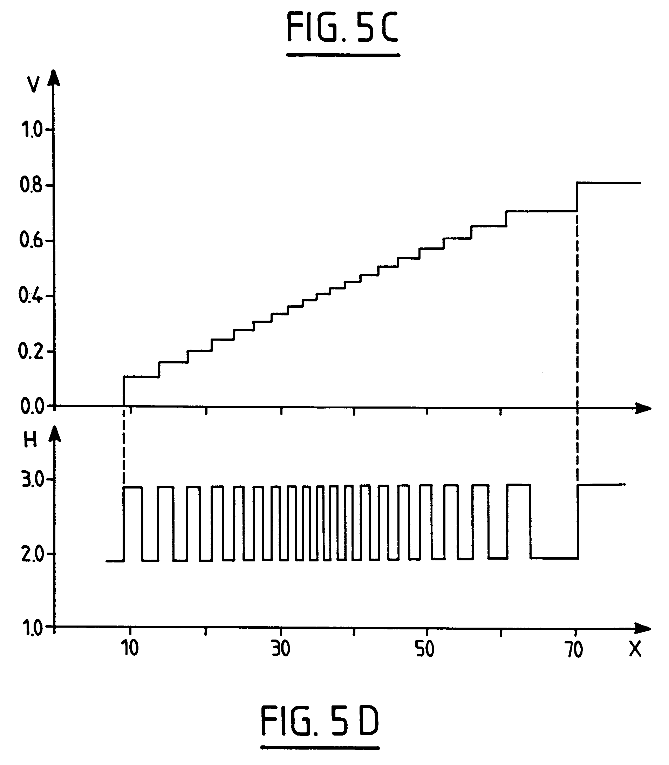

Avec une optique anamorphosante telle que celle représentée sur la figure 3D (cas le plus général) l'horloge sera continûment variable sur la durée d'une ligne. La durée totale T d'une ligne de données étant déterminée par le dispositif de visualisation, il s'ensuit que la période d'horloge sera plus courte au centre et plus élevée sur les extrémités que s'il s'était agit de lire les données à période constante. A partir d'une image présentant une variation d'un niveau de noir vers un niveau de blanc, le signal vidéo qui en découlerait serait constitué d'une rampe rectiligne sur toute la largeur de l'image s'il était lu sans aucun traitement et en l'absence de toute optique anamorphosante. A cause de l'existence d'une optique anamorphosante cette rampe n'apparaît plus continue si on l'observe avec une horloge de lecture à période constante. Ceci est représenté sur les figures 5A et 5B. La figure 5B représente l'horloge de sortie pour toute la durée de lecture de la largeur de l'image. La figure 5A représente les variations de signal vidéo lu à période constante. La rampe est formée de paliers qui se définissent par une allure rectiligne.

la figure 5D représente une horloge de lecture qui, selon l'invention, permet de restituer une allure rectiligne à la rampe de sortie formée de paliers. Mais ces paliers sont maintenant obtenus avec des périodes de lecture plus courtes au centre et plus élevées aux extrémités de la rampe. La résolution de l'image est accrue au centre.

Lorsque selon la figure 2D, l'optique anamorphosante applique une déformation uniforme dans une ou plusieurs parties de l'image, l'horloge de lecture n'est alors pas continûment variable mais est formée de durées pendant lesquelles les périodes d'horloge restent stables. Dans ces deux cas, les valeurs sont programmées dans la mémoire numérique.

Lorsqu'il s'agit de déterminer un champ de périodes central différent des champs latéraux, la programmation ne pose aucun problème. Lorsqu'il s'agit de faire respecter par la période de l'horloge de lecture une loi prédéterminée, la programmation peut s'effectuer de la manière suivante.

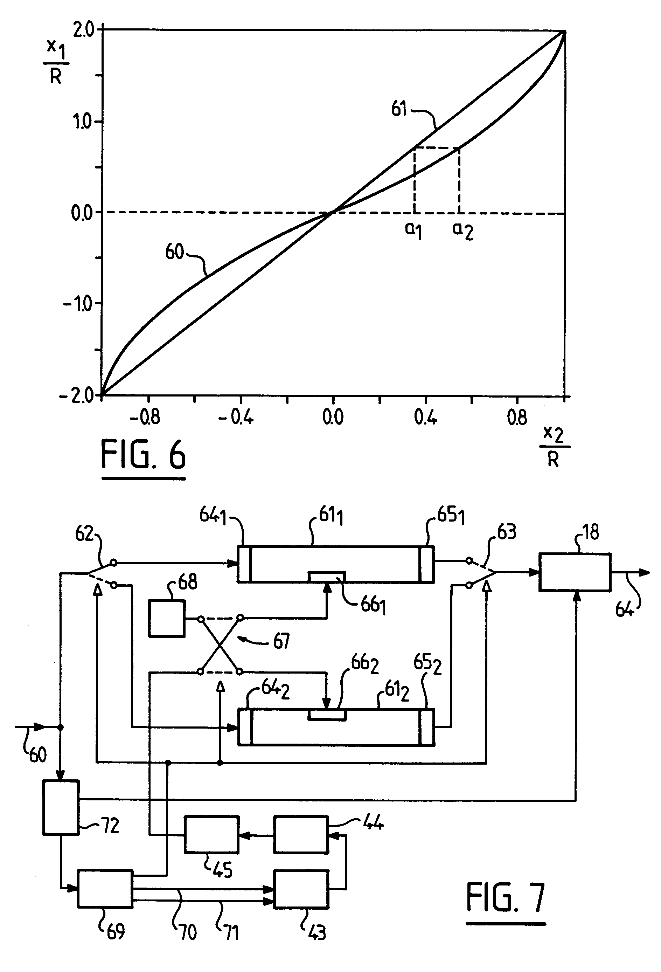

La figure 6 représente la courbe 60 de l'abscisse $a_2$ d'un point d'impact dans la direction de la déformation sur la surface du DTC en présence d'une optique anamorphosante. Elle est semblable à la figure 3A avec des axes gradués différemment. Si l'optique ne déformait pas, cette abscisse serait $a_1$ (courbe 61). Ces deux abscisses sont reliées par $a_1 = g(a_2)$ où la fonction $g(a)$ est la loi d'anamorphose à une constante multiplicatrice près.

Considérons maintenant l'ensemble des n éléments d'image d'une ligne quelconque du DTC localisés respectivement aux abscisses p, 2p, 3p ... np (p étant le pas). Dans le cas d'une période de lecture To constante qui représente la situation standard, l'instant d'apparition du signal de l'élément d'image numéro i en sortie sera ti, égal à la somme de i périodes To. Avec l'optique anamorphosante la période To est remplacée par des périodes Ti variables. Pour déterminer l'ensemble des Ti, on considère un point de l'image d'abscisse $a_2$ et soit t l'instant de lecture de ce point. Si l'image n'était pas déformée ce point de l'image apparaitraît en $a_1$.

Donc $t = (a_1/P).To$
soit $t = g(a_2).To/P$

soit pour un élément d'image d'ordre i placé en i.p, on a

$ti = g(ip).To/P.$

Entre deux lectures successives de deux éléments d'images i et (i-1) la période Ti est :

$Ti = (g(i.p)-g((i-1)p))To/P.$

Selon un autre mode de réalisation, il est également possible de ne pas effectuer la lecture à période variable du registre de sortie du DTC. En effet cette lecture à période plus faible accroît la largeur de bande du signal à transmettre et requiert une plus large bande passante. Ceci peut, selon la transmission utilisée, présenter des inconvénients. Dans ce cas la lecture du registre de sortie du DTC est faite à période constante et la lecture modulée est faite à l'autre extrémité de la ligne de transmission. On utilise alors le dispositif représenté sur la figure 7. Le signal vidéo issu du DTC arrive sur la connexion 60. Il est distribué alternativement sur deux mémoires de lignes $61_1$ et $61_2$ à l'aide d'un commutateur 62. Leurs sorties sont alternativement lues à l'aide d'un commutateur 63 et délivrées en sortie 64 au dispositif de visualisation par l'amplificateur de sortie 18. Chaque mémoire de ligne comprend un amplificateur d'entrée $64_1$, $64_2$, un amplificateur de sortie $65_1$, $65_2$, et un générateur de commande d'horloge $66_1$, $66_2$. Ces générateurs de commande $66_1$, $66_2$ reçoivent alternativement des horloges par l'intermédiaire du commutateur 67. Une horloge à période constante est fournie par un oscillateur local 68. Elle est utilisée pour charger alternativement l'une ou l'autre mémoire de lignes à l'aide des données qui arrivent sur l'entrée 60. Une autre horloge à période variable est issue d'un multivibrateur programmable 45 commandé par une mémoire 44 qui reçoit ses adresses d'un compteur d'adresses 43. Un générateur de séquences 69 fait fonctionner le compteur d'adresses 43 (connexion 70) et effectue sa remise à zéro (connexion 71).Ce générateur de séquences 69 agit également sur les commutateurs 62, 63 et 67 pour faire qu'une mémoire de lignes est en phase d'écriture à période constante tandis que l'autre mémoire de lignes est en phase de lecture à période variable. Les signaux de synchronisation qui existent dans le signal vidéo composite présent en entrée 60 sont détectés par le détecteur de signauxde synchronisation 72 et servent à agir sur le générateur de séquences 69 et également sont réintroduits dans l'amplificateur de sortie 18 en fin de traitement.

La mémoire de ligne peut être un registre à décalage analogique ou un registre à décalage numérique muni en entrée d'un convertisseur analogique-numérique et en sortie d'un convertisseur numérique-analogique.

**Revendications**

1. Caméra (10) de prise de vue de télévision destinée à examiner une scène (11) et A en fournir une image dont une partie présente une résolution accrue caractérisée en ce que la caméra possède en entrée un objectif (13) qui fournit une image de la scène sur la surface d'entrée d'une optique anamorphosante (14) qui déforme l'image selon une loi prédéterminée dans une direction unique donnée pour obtenir au moins deux parties d'image de grandissement différent, l'optique (14) coopérant avec un dispositif (15) de prise de vue A transfert de charges qui comprend des moyens (40 - 48) pour compenser électroniquement la déformation créée par l'optique anamorphosante pour chacune desdites parties d'images en opérant, à l'aide d'une horloge (H) modulée en fréquence, une lecture des charges créées par l'image optique incidente dans le dispositif de prise de vue à transfert de charges, de sorte que le signal délivré par le dispositif à transfert de charges permet de restituer une image finale qui ne soit plus déformée et qui présente une résolution différente selon les parties de l'image.

2. Caméra selon la revendication 1, caractérisée en ce que lesdites parties d'images de grandissement différent forment une image progressivement grandie ou dégrandie.

3. Caméra selon la revendication 1, caractérisée en ce que lesdites parties d'images de grandissement différent comprennent au moins une partie grandie ou dégrandie.

4. Caméra selon une des revendications 1 à 3, caractérisée en ce que l'optique anamorphosante délivre une image ayant un grandissement modifié dans ses parties extrêmes, la partie centrale n'étant pas modifiée.

5. Caméra selon une des revendications 1 à 4, caractérisée en ce que l'optique anamorphosante comprend un conduit d'images à fibres optiques principal (210), ayant une surface d'entrée non plane (211) (213), accolé par une partie (213) de sa surface d'entrée à toute l'étendue d'une surface de sortie (222) d'au moins un conduit d'images à fibres optiques annexe (220) taillé en forme de biseau, l'autre partie (211) de la surface d'entrée du conduit principal et la face d'entrée (221) du conduit annexe (220) étant situées dans la surface image de l'objectif d'entrée, les axes des fibres optiques des deux conduits n'étant pas parallèles entre eux, La surface de sortie de l'optique anamorphosante étant celle (212) du conduit d'images principal (210).

6. Caméra selon une des revendications 1 à 5, caractérisée en ce que le dispositif de prise de vue à transfert de charges est un dispositif bidimensionnel organisé en lignes et en colonnes et qui reçoit l'image déformée de sorte que la déformation se présente selon une direction sensiblement parallèle à la direction des lignes.

7. Caméra selon la revendication 6, caractérisée en ce que l'horloge de lecture du registre à décalage de sortie présente une période plus courte pour extraire les données correspondant à la partie à haute résolution que pour extraire celles correspondant aux autres parties.

8. Caméra selon une des revendications 1 à 7, caractérisée en ce que l'horloge de lecture est obtenue par un générateur d'horloge (40) qui agit sur un compteur d'adresses (43) qui sert à lire une mémoire numérique (44) qui stocke des données qui contrôlent un multivibrateur programmable (45) qui délivre l'horloge de lecture selon lesdites données relatives à la loi prédéterminée.

9. Caméra selon la revendication 7, modifiée en ce que le registre à décalage de sortie est lu à l'aide d'une horloge à période uniforme, les données de sortie étant transmises par un canal de transmission vers deux mémoires de ligne externes ($61_1$) ($61_2$) dont l'une est écrite à période uniforme pendant que l'autre est lue à période programmée, en fonction de la loi prédéterminée, chaque mémoire de lignes étant alternativement commutée en mode lecture et en mode écriture à chaque impulsion de retour de ligne de télévision.

## Claims

1. A television camera (10) for picking up a scene (11) and for producing an image therefrom, a part of which has an increased resolution, characterized in that the camera is provided at its input with an objective (13) which produces an image of the scene on the entrance face of an anamorphic optical system (14) which deforms the image in accordance with a predetermined rule in a given single direction, for obtaining at least two image parts of different magnification, the optical system co-operating with a charge-transfer pick-up device (15) comprising means (40-48) for electronically compensating for the deformation produced by the anamorphic optical system for each of said image parts by reading, with the aid of a frequency-modulated clock (H), the charges produced by the incident optical image in the charge transfer pick-up device so that the signal supplied by the charge transfer device allows recovery of a final image which is no longer deformed and has a different resolution dependant on the parts of the image.

2. A camera as claimed in Claim 1, characterized in that said image parts having a different magnification constitute an image which is progressively magnified or demagnified.

3. A camera as claimed in Claim 1, characterized in that said image parts having a different magnification comprise at least a magnified or demagnified part.

4. A camera as claimed in Claims 1 to 3, characterized in that the anamorphic optical system supplies an image having a modified magnification in its extreme parts, the central part not being modified.

5. A camera as claimed in anyone of Claims 1 to 4, characterized in that the anamorphic optical system comprises a main fibre-optical image guide (210), having a non-planar entrance (211) (213), having a part (213) of its entrance face connected to the entire exit face (222) of at least one supplementary fibre-optical beveled image guide (220), the other part (211) of the entrance face of the main guide and the entrance face (221) of the supplementary guide (220) being located in the image plane of the input objective, the axes of the optical fibres of the two guides being not parallel to one another, the exit face of the anamorphic optical system being the exit face (212) of the main image guide (210).

6. A camera as claimed in any one of Claims 1 to 5, characterized in that the charge-transfer pick-up device is a bidimensional device arranged in rows and columns and receiving the deformed image such that the deformation is present in a direction which is substantially parallel to the row direction.

7. A camera as claimed in Claim 6, characterized in that the read clock of the output shift register has a shorter period to extract the data corresponding to the high-resolution part than for the extraction of the data corresponding to the other parts.

8. A camera as claimed in anyone of the Claims 1 to 7, characterized in that the read clock is obtained from a clock generator (40) acting on an address counter (43), which has for its object to read a digital memory (44) storing data which control a programmable multivibrator (45) which supplies the read clock according to said data relating to the predetermined rule.

9. A camera as claimed in Claim 7, characterized in that the output shift register is read by means of a clock having a uniform rate, the output data being transmitted <u>via</u> a transmission channel to two external <u>line</u> memories $(61_1)$ $(61_2)$, one of which is written at a uniform rate while the other is read at a programmed rate, as a function of the predetermined rule, each line memory being alternately switched to the read mode and to the write mode at each television line flyback pulse.

## Patentansprüche

1. Fernsehbildaufnahmekamera (10), die dazu bestimmt ist, ein Objekt (11) zu betrachten und davon ein Bild herzustellen, von dem ein Teil eine erhöhte Auflösung aufweist, dadurch gekennzeichnet, daß die Kamera an ihrem Eintritt ein Objektiv (13) aufweist, das von dem Objekt ein Bild auf der Eintrittsfläche einer Zerroptik (14) liefert, die das Bild nach einem vorgegebenen Gesetz in nur einer Richtung verzerrt, um mindestens zwei Bildteile unterschiedlicher Vergrößerung zu erhalten, wobei die Optik (14) mit einer Ladungsübertragungs-Bildaufnahmevorrichtung (15) zusammenarbeitet, die Mittel (40 - 48) zur elektronischen Kompensation der durch die Zerroptik bewirkten Verzerrung der einzelnen Bildteile besitzt, wobei mit Hilfe eines frequenzmodulierten Taktes (H) die Ladungen gelesen werden, die durch das in die Ladungsübertragungs-Bildaufnahmevorrichtung einfallende optische Bild erzeugt werden derart, daß anhand des vom Ladungsübertragungselements gelieferten Signals ein endgültiges Bild wiederhergestellt werden kann, daß nicht mehr verzerrt ist und in einzelnen Bildteilen eine unterschiedliche Auflösung aufweist.

2. Kamera nach Anspruch 1, dadurch gekennzeichnet, daß die Bildteile mit unterschiedlicher Vergrößerung ein progressiv vergrößertes oder verkleinertes Bild darstellen.

3. Kamera nach Anspruch 1, dadurch gekennzeichnet, daß die Bildteile unterschiedlicher Vergrößerung mindestens einen vergrößerten oder verkleinerten Bereich umfassen.

4. Kamera nach einem der Ansprüche 1 bis 3, dadurch gekennzeichnet, daß die Zerroptik ein Bild liefert, das in seinen äußeren Bereichen eine veränderte Vergrößerung aufweist, während der mittlere Bereich unverändert ist.

5. Kamera nach einem der Ansprüche 1 bis 4, dadurch gekennzeichnet, daß die Zerroptik einen faseroptischen Hauptbildleiter (210) mit einer nicht planen Eintrittsfläche (211) (213) umfaßt, der mit einem Teil (213) seiner Eintrittsfläche an der gesamten Erstreckung einer Austrittsfläche (222) mindestens eines facettenförmigen faseroptischen Nebenbildleiters (220) anliegt, während der übrige Teil (211) der Eintrittsfläche des Hauptleiters sowie die Eintrittsfläche (221) des Nebenleiters (220) in der Bildfläche des Eintrittsopjektivs liegen, wobei die Faserachsen der beiden Bildleiter nicht parallel zueinander verlaufen und die Austrittsfläche der Zerroptik der Austrittsfläche (212) des Hauptbildleiters (210) entspricht.

6. Kamera nach einem der Ansprüche 1 bis 5, dadurch gekennzeichnet, daß es sich bei der ladungsübertragungs-Bildaufhahmevomchtung um ein zweidimensionales, nach Zeilen und Spalten aufgebautes Element handelt, das das verzerrte Bild so empfängt, daß die Verzerrung sich in einer Richtung im wesentlichen parallel zur Zeilenrichtung darstellt.

7. Kamera nach Anspruch 6, dadurch gekennzeichnet, daß der Lesetakt des Ausgangsschieberegisters für das Auslesen der dem Bereich höherer Auflösung entsprechenden Daten eine kürzere Periode aufweist als für das Auslesen der den übrigen Bereichen entsprechenden Daten.

8. Kamera nach einem der Ansprüche 1 bis 7, dadurch gekennzeichnet, daß der Takt mittels eines Taktgebers (40) erzeugt wird, der auf einen Adreßzähler (43) arbeitet, der zum Auslesen eines numerischen Speichers (44) dient, in dem Steuerdaten für einen programmierbaren Multivibrator (45) gespeichert sind, der den Lesetakt entsprechend den genannten Daten und dem vorgegebenen Gesetz ableitet.

9. Kamera nach Anspruch 7, die jedoch insoweit geändert ist, daß das Ausgabe-Schieberegister des Ladungsübertragungselements mittels eines Taktes einheitlicher Periode ausgelesen wird, wobei die Ausgabedaten über eine Übertragungsleitung zwei externen Zeilenspeichern $(61_1)$ $(61_2)$ zugeführt werden, wobei in einem Speicher die Aufzeichnung mit gleichbleibender Taktperiode erfolgt, während das Auslesen im anderen Speicher mit programmierter Taktperiode in Abhängigkeit von dem vorgegebenen Gesetz erfolgt und die Zeilenspeicher bei jedem Fernsehzeilenrücksprungimpuls abwechselnd in den Aufzeichnungs- und Auslesemodus geschaltet werden.

FIG.1

FIG. 4

FIG. 2A

FIG. 2B

FIG. 2C

FIG. 2D

FIG. 3A

FIG. 3B

FIG. 3E

FIG. 3C

FIG. 3D

# FIG. 5A

# FIG. 5B

# FIG. 5 C

# FIG. 5 D

FIG. 6

FIG. 7